# EUROPÄISCHE PATENTANMELDUNG

(11) **EP 2 075 379 A1**
(43) Veröffentlichungstag der Anmeldung: **01.07.2009**
(21) Anmeldenummer: 09002844.0
(22) Anmeldetag: 23.03.2006
(51) Int. Cl.: E03B 7/12, F16K 31/46, F16K 1/04, F16K 27/00

(54) **Frostsicheres Außenwandventil**

(30) Priorität: 27.05.2005 DE 202005008464 U; 03.11.2005 DE 202005017350 U
(62) Teilanmeldung aus: 06005977.1
(71) Anmelder: InterForge Klee GmbH, 27356 Rotenburg (DE)
(72) Erfinder: Klee, Klaus, 27383 Scheessel (DE)
(74) Vertreter: Eisenführ, Speiser & Partner

(57) **Zusammenfassung**

Die Erfindung betrifft eine Ventilvorrichtung für den frostsicheren Außenbetrieb, umfassend: eine Zulauföffnung (10), eine Abgabeöffnung (20), einen Verbindungskanal (30), welcher die Zulauföffnung mit der Abgabeöffnung verbindet, ein Hauptventil (40), welches ausgebildet ist, um die Fluidverbindung durch den Verbindungskanal in einer offenen Funktionsstellung freizugeben und in einer geschlossenen Funktionsstellung zu verschließen, eine Betätigungsvorrichtung (50,57) zum Betätigen des Hauptventils, und Entleerungsmittel (70) zum Entleeren der Ventilvorrichtung in der geschlossenen Funktionsstellung. Ein Problem bei solchen Ventilvorrichtungen ist, dass unerwünschter Flüssigkeitsaustritt aus der Ventilvorrichtung auftritt, wenn Belüftungsöffnungen vorgesehen sind. Dies wird erfindungsgemäß vermieden, indem die Entleerungsmittel eine Bypassleitung (110) umfassen, die einen ersten Verbindungskanalabschnitt mit einem zweiten Verbindungskanalabschnitt verbindet.

## Beschreibung

Die Erfindung betrifft eine Ventilvorrichtung für den frostsicheren Außenbetrieb, umfassend:
- eine Zulauföffnung,
- eine Abgabeöffnung,
- einen Verbindungskanal, welcher die Zulauföffnung mit der Abgabeöffung verbindet,
- ein Hauptventil, welches ausgebildet ist, um die Fluidverbindung durch de Verbindungkanal in einer offenen Funktionsstellung freizugeben und in einer geschlossenen Funktionsstellung zu verschließen,
- eine Betätigungsvorrichtung zum Betätigen des Hauptventils, und
- Entleerungsmittel zum Entleeren der Ventilvorrichtung in der geschlossenen Funktionsstellung.

Eine Ventilvorrichtung dieser Art ist aus DE 202 19 008 bekannt, deren Offenbarung hiermit durch Bezugnahme zu Offenbarungszwecken voll einbezogen wird. Dieses vorbekannte frostsichere Außenwandventil erreicht die Frostsicherheit dadurch, dass der Innenraum der Ventilvorrichtung nach dem Schließen des Hauptventils durch ein Belüftungsventil belüftet wird. Das Belüftungsventil der vorbekannten Ventilvorrichtung ist ein federbelastetes Ventil, welches sich unter dem Innendruck in der Ventilvorrichtung bei geöffnetem Hauptventil schließt und bei geschlossenem Hauptventil und nachlassendem Innendruck durch eine Druckfeder in die geöffnete Stellung bewegt wird, wodurch der Zutritt von Luft in das Ventilinnere möglich ist und das Ablaufen des darin stehenden Wassers durch die Abgabeöffnung erreicht wird.

Diese Ventilvorrichtung kann einen zuverlässigen frostsicheren Betrieb ermöglichen. Es hat sich jedoch in der Praxis gezeigt, dass die vorbekannte Ventilvorrichtung noch weiter verbessert werden kann.

Bei Ventilvorrichtungen, die im Bereich der Trinkwasserversorgung an das Trinkwassernetz angeschlossen werden ist es vorteilhaft und in einer Reihe von Ländern vorgeschrieben, dass ein Rückflussverhinderungsventii vorhanden ist, welches dazu dient, die Einspeisung von verschmutztem Wasser in das Trinkwassernetz entgegen der Flussrichtung durch das Ventil zu verhindern. Solche Rückflussverhinderungsventile werden typischerweise als federbelastete Rückschlagventile ausgeführt. Bei der Abstimmung der Federkraft eines solchen Rückflussverhinderungsventils und des Belüftungsventils des vorbekannten frostsicheren Außenwandventils kann es jedoch problematisch sein, die Federkräfte so zu dimensionieren, dass einerseits eine sichere Verhinderung des Rückflusses und andererseits eine zuverlässige Öffnung des Belüftungsventils im drucklosen Zustand erzielt wird.

Der Erfindung liegt die Aufgabe zugrunde, das vorbekannte Ventil weiter zu entwickeln, um einen frostsicheren Außenbetrieb zu gewährleisten und gleichzeitig zu ermöglichen, dass ein Rückflussverhinderungsventil mit der Ventilvorrichtung gekoppelt wird oder in diese integriert wird, ohne dass es zu Funktionsbeeinträchtigungen kommt.

Dies wird erfindungsgemäß erreicht, indem die Entleerungsmittel eine Bypassleitung umfassen, die einen ersten Verbindungskanalabschnitt mit einem zweiten Verbindungskanalabschnitt verbindet.

Die erfindungsgemäße Ventilvorrichtung vermeidet die Notwendigkeit zweier federbetätigter Ventile innerhalb des Ventils und erreicht damit sowohl eine sichere Belüftung des Verbindungskanals im abgesperrten Zustand als auch eine sichere Rückflussverhinderung. Über die Bypassleitung wird der Belüftungsfluss zwischen den Verbindungskanal-abschnitten.erzielt und damit werden die Druckverhältnisse für eine gesamte Entleerung bzw. Belüftung des Verbindungskanals im frostgefährdeten Bereich geschaffen.

Es hat sich überraschend gezeigt, dass die erfindungsgemäße Ventilvorrichtung eine besonders gute Funktionssicherheit auch bei einer an die Abgabeöffnung der Ventilvorrichtung angeschlossenen Schlauchleitung oder eines anderen angeschlossenen Geräts, welches einen Druckzustand in der Ventilvorrichtung hervorrufen kann, aufweist. In der Praxis kann es beispielsweise erfolgen, dass ein Schlauch mit seinem ersten Ende an die Abgabeöffnung der Ventilvorrichtung angeschlossen wird und dieser Schlauch an seinem zweiten Ende seinerseits selbst eine Verschlussvorrichtung aufweist. In diesem Fall kann im Schlauch und der Ventilvorrichtung unabhängig davon ein Druckzustand aufrecht erhalten werden, ob das Hauptventil der Ventilvorrichtung geöffnet oder geschlossen ist, indem die Absperrvorrichtung am zweiten Schlauchende geschlossen oder gedrosselt wird.

In solchen Fällen vermeidet die erfindungsgemäße Ventilvorrichtung einen durch diese externe Druckbeaufschlagung verursachten unerwünschten Flüssigkeitsaustritt durch die Entleerungsmittel.

Die erfindungsgemäße Fortbildung erzielt eine Sicherheit gegen solchen Flüssigkeitsaustritt, indem die Bypassleitung beidseitig mit dem Druck beaufschlagt wird, der im Inneren des Verbindungskanals bzw. einer daran angeschlossenen Schlauchleitung herrscht. Auf diese Weise wird verhindert, dass ein in der Ventilvorrichtung herrschender Druck zu einem Flüssigkeitsaustritt aus der Ventilvorrichtung führen kann, da die Entleerungsmittel über die Bypassleitung einen gegenüber der Umgebung der Ventilvorrichtung geschlossenen Kreislauf ausbilden.

Dabei ist es besonders bevorzugt, wenn der zweite Verbindungskanalabschnitt in Einbaulage der Ventilvorrichtung in Schwerkraftrichtung oberhalb des ersten Verbindungskanalabschnitts liegt. Auf diese Weise wirkt auf die Öffnung der Bypassleitung, die in den ersten Verbindungskanalabschnitt mündet, eine geringere hydrostatische Kraft als auf die Öffnung der Bypassleitung, die in den zweiten Verbindungskanalabschnitt mündet. Dies bewirkt, dass sich ein Luftfluss von der Abgabeöffnung zu dem zweiten Verbindungskanalabschnitt, von dort durch die Bypassleitung und über die Bypassleitung in den ersten Verbindungskanalabschnitt ausbilden kann, der eine wirksame Belüftung des Verbindungskanals bewirkt.

Weiterhin ist es vorteilhaft, wenn die Bypassleitung den ersten Verbindungskanalabschnitt mit einem Belüftungszwischenraum verbindet, der mit dem zweiten Verbindungskanalabschnitt verbunden ist. Durch diesen Zwischenraum wird ein Luftspeicher bereitgestellt, der zu einem gleichmäßigeren Belüftungsfluss und somit einem gleichmäßigeren Entleerungs-Flüssigkeitsfluss führt.

Insbesondere kann die Bypassleitung vorzugsweise in einem Gehäusewandabschnitt der Ventilvorrichtung ausgebildet sein und in Einbaulage der Ventilvorrichtung von dem Belüftungszwischenraum in Schwerkraftrichtung zumindest in einem Abschnitt abwärts zur Ausgabeöffnung verlaufen. Dies verhindert, dass sich Flüssigkeit im Belüftungszwischenraum und/oder in der Bypassleitung sammeln kann.

Weiterhin ist bevorzugt, die Bypassleitung in jeder Stellung der Betätigungsvorrichtung den ersten und zweiten Verbindungskanalabschnitt verbindet. So kann der Bypasskanal beispielsweise über durchgehende Belüftungskanäle ohne darin enthaltene Ventile oder dergleichen die Verbindungskanalabschnitte verbinden.

Es ist weiterhin bevorzugt, dass die Entleerungsmittel ein Belüftungsventil in der Bypassleitung umfassen. Durch ein solches Belüftungsventil kann die Bypassleitung manuell oder mittels Federkraft- oder Druckbeaufschlagung sicher verschlossen werden und somit in bestimmten Betriebspositionen zuverlässig verhindert werden, dass eine Strömung durch die Bypassleitung erfolgt.

Das Belüftungsventil erlaubt einen Zutritt von Umgebungsluft in den Verbindungskanal zwecks Entleerung der Flüssigkeit aus dem Verbindungskanal in einer geöffneten Stellung und verhindert in einer geschlossenen Stellung den Luft-bzw. Flüssigkeitsfluss durch die Bypassleitung. Auf diese Weise wird einerseits eine sichere Belüftung erreicht und andererseits verhindert, dass unerwünscht Wasser aus der Ventilvorrichtung austreten kann, wenn dies nicht erwünscht ist.

Dabei ist es besonders bevorzugt, wenn das Belüftungsventil einen Ventilsitz und einen Ventilkörper umfasst, der in einer ersten Position der Betätigungsvorrichtung auf der ersten Bewegungsbahn auf den Ventilsitz gepresst ist und in einer zweiten Position der Betätigungsvorrichtung auf der ersten Bewegungsbahn vom Ventilsitz abgehoben ist. Auf diese Weise kann das Belüftungsventil direkt durch die Bewegung der Betätigungsvorrichtung entlang der ersten Bewegungsbahn betätigt werden und in definierte Positionen zur Belüftung bzw. zur Verhinderung eines Flüssigkeitsaustritts aus dem Innenraum bewegt werden.

Eine weitere wichtige Fortbildung der erfindungsgemäßen Ventilvorrichtung besteht darin, dass die Betätigungsmittel ausgebildet sind, um die Entleerungsmittel zum Entleeren der Ventilvorrichtung durch Bewegen der Betätigungsvorrichtung entlang einer ersten Bewegungsbahn zu öffnen bzw. zu schließen und um das Hauptventil durch Bewegen der Betätigungsvorrichtung entlang einer zweiten Bewegungsbahn zu öffnen bzw. zu schließen.

Diese erfindungsgemäße Fortbildung greift auf eine spezielle, nur teilweise autonome Betätigung der Entleerungsmittel zurück und erreicht dadurch, dass die federbetätigte automatische Betätigung der Entleerungsmittel nach dem Stand der Technik nicht erforderlich ist. Die Fortbildung weist den Vorteil auf, dass die manuelle Betätigung der Entleerungsmittel durch dieselben Betätigungsmittel erfolgt, die auch zum Öffnen und Schließen des Hauptventils dienen. Hierbei wird durch zwei unterschiedliche Bewegungsbahnen zum Öffnen des Hauptventils und zum Entleeren der Ventilvorrichtung dem Benutzer eine sichere und einfach nachvollziehbare Betätigung der erfindungemäßen Ventilvorrichtung ermöglicht. Die Bewegung der Betätigungsmittel entlang zweier unterschiedlicher Bewegungsbahnen ermöglicht zudem, einen besonders einfachen und robusten Aufbau der Ventilvorrichtung zu realisieren und hierdurch die Betriebssicherheit und Langlebigkeit weiter zu erhöhen.

Erfindungsgemäß soll unter der ersten Bewegungsbahn eine rotatorische, translatorische oder in anderer Weise ausgerichtete Bewegung der Betätigungsvorrichtung oder eines Teils der Betätigungsvorrichtung verstanden werden. In gleicher Weise soll unter der zweiten Bewegungsbahn eine rotatorische, translatorische oder anders ausgerichtete Bewegung der Betätigungsvorrichtung oder des zuvor genannten, gleichen Teils der Betätigungsvorrichtung verstanden werden. Die erste und zweite Bewegungsbahn sind dabei erfindungsgemäß unterschiedlich ausgerichtet, können jedoch beide entlang ihrer Bewegungsbahn in einer Richtung und der dazu entgegengesetzten Richtung ausgeführt werden, um beispielsweise eine Öffnungsbewegung und eine Schließbewegung durch Bewegung in entgegensetzten Richtungen entlang einer übereinstimmenden Bewegungsbahn zu erreichen.

Eine besonders günstige Ausführungsform der Ventilvorrichtung nach der Erfindung umfasst das zuvor beschriebene Belüftungsventil und die zuvor beschriebenen Betätigungsmittel zum Bewegen der Betätigungsvorrichtung entlang einer ersten und zweiten Bewegungsbahn. Dies ermöglicht es, dass die erste Bewegungsbahn zur Betätigung des Belüftungsventils dient und die zweite Bewegungsbahn zur Betätigung des Hauptventils dient. Auf diese Weise wird eine sichere und für einen Benutzer einfach nachvollziehbare Betätigung des Belüftungsventils und des Hauptventils durch Bedienung einer einzigen Betätigungsvorrichtung erzielt. Das Belüftungsventil wird dabei vorzugsweise direkt durch die Bewegung der Betätigungsvorrichtung entlang der ersten Bewegungsbahn betätigt.

Es ist weiterhin besonders bevorzugt, wenn die zweite Bewegungsbahn eine Drehbewegungsbahn ist und die erste Bewegungsbahn eine axial zu dieser Drehbewegungsbahn liegende translatorische Bewegungsbahn ist. Dies ermöglicht einem Benutzer eine intuitive Betätigung der erfindungsgemäßen Ventilvorrichtung, indem die eigentliche Öffnung und Schließung des Hauptventils durch eine gewohnte Drehbewegung erreicht wird und die Öffnung und Schließung der Entleerungsmittel durch eine axial-translatorische Bewegung bewirkt wird.

Es ist weiterhin bevorzugt, wenn die Betätigungsvorrichtung ein in den zwei Bewegungsbahnen bewegbares Betätigungselement umfasst Ein solches Betätigungselement kann beispielsweise ein Drehgriff, Zug- oder Druckknopf oder Schwenkhebel sein.

Weiterhin bevorzugt ist es, wenn die Entleerungsmittel eine Belüftungsöffnung aufweisen, die einen Zutritt von Umgebungsluft in den Verbindungskanal zwecks Entleerung der Flüssigkeit aus dem Verbindungskanal erlaubt, vorzugsweise durch die Abgabeöffnung. Dies ermöglicht die sichere Belüftung des Innenraums der Ventilvorrichtung.

Weiterhin ist bevorzugt, wenn die erfindungsgemäße Ventilvorrichtung eine Führungsvorrichtung zum Führen der Betätigungsvorrichtung entlang der ersten und zweiten Bewegungsbahn aufweist. Eine solche Führungsvorrichtung kann in Form einer Schwenk- oder Drehachse, eines Schiebesitzes oder Ähnlichem bereitgestellt werden und ist besonders bevorzugt, da hierdurch Fehlbedienungen durch einen Benutzer ausgeschlossen werden können, indem nur eine Bewegung der Betätigungsvorrichtung entlang der geführten Richtungen erfolgen kann. Auf diese Weise kann einerseits eine vorbestimmte Bewegungsrichtung als auch ein vorbestimmter Bewegungsablauf zuverlässig sichergestellt werden und hierdurch beispielsweise bestimmte Funktionszustände der erfindungsgemäßen Ventilvorrichtung in einer vorbestimmten Reihenfolge durchlaufen werden.

Dabei ist es besonders bevorzugt, wenn die Führungsvorrichtung die Betätigungsvorrichtung aus einer ersten, geschlossenen Position, in der das Hauptventil geschlossen und die Entleerungsmittel in einer Entleerungsposition sind in einer ersten Betätigungsphase entlang einer ersten Richtung auf der ersten Bewegungsbahn in eine zweite Position führen, in der das Hauptventil geschlossen und die Entleerungsmittel in einer Nicht-Entleerungsposition sind, und in einer zweiten Betätigungsphase entlang einer ersten Richtung auf der zweiten Bewegungsbahn in eine dritte, geöffnete Position führen, in der das Hauptventil geöffnet und die Entleerungsmittel in einer Nicht-Entleerungsposition sind. Auf diese Weise werden, ausgehend von der geschlossenen Position des Hauptventils zunächst die Entleerungsmittel in eine Position gebracht, in denen keine Entleerung stattfinden kann, d.h. beispielsweise das Belüftungsventil geschlossen ist, und hierauf folgend in der zweiten Betätigungsphase das Hauptventil geöffnet wird, wobei die Entleerungsmittel weiterhin in der zuvor eingestellten Position bleiben, d.h. beispielsweise das Belüftungsventil weiterhin geschlossen bleibt. So wird sicher verhindert, dass in der geöffneten Position des Hauptventils keine Flüssigkeit entlang der Entleerungsmittel durchtreten kann, d.h. beispielsweise durch das Belüftungsventil nach außen dringen kann.

Dabei ist es weiterhin bevorzugt, wenn die Führungsvorrichtung die Betätigungsvorrichtung aus der dritten, geöffneten Position in einer dritten Betätigungsphase in einer zweiten Richtung entlang der zweiten Bewegungsbahn entgegengesetzt zur Bewegung der zweiten Betätigungsphase zurück in die zweite Position führen, und in einer vierten Betätigungsphase in einer zweiten Richtung entlang der ersten Bewegungsbahn entgegengesetzt zur Bewegung der ersten Betätigungsphase zurück in die erste Position führen. Auf diese Weise wird erreicht, dass durch intuitive Betätigung der Betätigungsvorrichtung durch einen Benutzer in genau der entgegengesetzten Reihenfolge und Richtung wie zuvor der ursprüngliche, geschlossene Zustand des Hauptventils wieder erreicht wird und eine Entleerung des Innenraums der Ventilvorrichtung erzielt wird.

Es ist weiterhin bevorzugt, wenn die Betätigungsmittel eine Kulissenführung umfassen. Eine Kulissenführung eignet sich in besonderer Weise für eine sichere, zuverlässige und kostengünstige Ausbildung der Führungsmittel für die Betätigungsmittel und kann dabei eine große Vielzahl von Bewegungsbahnen bereitstellen.

Dabei ist es besonders bevorzugt, wenn die Kulissenführung mindestens einen Stift umfasst, der mit einem Gehäuseabschnitt der Ventilvorrichtung oder mit einem Betätigungsknopf der Betätigungsmittel verbunden ist, und eine den Stift führende Kulissenbahn, die entsprechend an dem Betätigungsknopf der Betätigungsmittel oder am Gehäuse der Ventilvorrichtung ausgebildet ist. Eine solche Art der Kulissenführung mit Stift und Kulissenbahn ist für die Zwecke der erfindungsgemäßen Ventilvorrichtung bevorzugt geeignet und lässt sich platzsparend im Bereich der Betätigungsvorrichtung anordnen.

Es ist bevorzugt, das Hauptventil als Schieberventil, insbesondere als Drehschieberventil auszubilden.

Diese Fortbildung beruht auf der Erkenntnis, dass ein gewisser Austritt von Wasser aus der Abgabeöffnung bzw. dem Abfluss bei frostsicheren Ventilen unvermeidbar ist und folglich andere Wege gefunden werden müssen, um eine Fehlbedienung auszuschließen. Dies wird erreicht, indem dem Benutzer eine vollkommen andere Haptik bei der Betätigung der Ventilvorrichtung bereitgestellt wird. Durch die Ausführung des Ventils als Schieberventil wird dem Benutzer vermittelt, dass in einer exakt definierten Verschlussposition das Ventil geschlossen ist und auch nicht durch weitere Krafteinwirkung weiter geschlossen werden kann. Auf diese Weise wird verhindert, dass der Benutzer sich veranlasst sieht, die Ventilvorrichtung mit einer unzulässig hohen Kraft zu bedienen.

Insbesondere ist es bevorzugt, das erste Ventil als Drehschieberventil auszubilden. Diese Ausführungsform ist für die Konstruktion der erfindungsgemäßen Ventilvorrichtungen von besonderem Vorteil, da auf diese Weise eine einfache und zuverlässige Übertragung der Betätigungskräfte von der Betätigungsvorrichtung auf das erste Ventil möglich ist und die gewohnte Drehbewegung als zweite Bewegungsbahn realisiert werden kann.

Darüber hinaus bietet die erfindungsgemäße Ventilvorrichtung den Vorteil, dass der Benutzer bei einem Schieberventil die Dichtungsflächen nicht durch übermäßige Kraftanwendung aufeinander pressen kann. Ein Schieberventil ist grundsätzlich **dadurch gekennzeichnet, dass** die Durchlassöffnung(en) geschlossen werden, indem eine Scherbewegung zwischen Verschlusskörper und Durchlassöffnung stattfindet, in der Regel eine quer zur Durchflussrichtung liegende Schiebe- oder Drehbewegung. Die Dichtungsflächen werden dadurch in der Regel nicht senkrecht aufeinander zubewegt und eine erhöhte Betätigungskraft kann nicht zu einer erhöhten Anpresskraft zwischen den Dichtungsflächen führen. Auf diese Weise wird eine Beschädigung der Dichtungsflächen durch eine solche Fehlbedienung ausgeschlossen.

Zu Einzelheiten und Vorteilen der Gestaltung des Hauptventils wird auf die Beschreibung zu Anspruch 1 und das Ausführungsbeispiel in DE 20 2005 008 464 Bezug genommen.

Es ist dabei besonders bevorzugt, wenn das Hauptventil ein erstes Ventilelement mit mindestens einer Durchflussöffnung und ein zweites Ventilelement umfasst , das um eine Achse drehbar ist und mindestens eine exzentrische Dichtungsfläche aufweist, welche die Durchflussöffnung(en) des ersten Ventilelements in der geschlossenen Funktionsstellung verschließt (verschließen). Diese Ausführungsform erlaubt eine robuste Konstruktion und eine sichere Abdichtung des ersten Ventils der Ventilvorrichtung.

Dabei ist es insbesondere bevorzugt, wenn das erste Ventilelement und das zweite Ventilelement in offener und geschlossener Funktionsstellung den gleichen axialen Abstand zueinander aufweisen. Auf diese Weise wird die Bewegung des ersten und zweiten Ventilkörpers zueinander weitestgehend vereinfacht und eine robuste Konstruktion der Ventilvorrichtung erzielt.

Insbesondere ist es dabei vorteilhaft, wenn das erste Ventilelement als Scheibe mit zwei exzentrischen Öffnungen ausgebildet ist. Durch die zwei exzentrischen Öffnungen wird ein ausreichender Durchflussquerschnitt durch das erste Ventilelement bereitgestellt, wobei die Öffnungen dennoch eine ausreichende Größe aufweisen, um unempfindlich gegenüber Verschmutzungen oder Verkalkungen zu sein. In diesem Fall ist das zweite Ventilelement vorzugsweise mit zwei Dichtungsflächen versehen, die ebenso exzentrisch angeordnet sind wie die Öffnungen im ersten Ventilelement. Vorzugsweise sind diese Öffnungen um 180° zueinander versetzt und erstrecken sich jeweils über einen Winkelbereich von etwa 90°.

Es ist insbesondere bevorzugt, dass das Hauptventil zumindest ein Ventilelement aus einem keramischen Material aufweist, vorzugsweise zwei Ventilelemente aus einem keramischen Material. Keramische Materialien sind für die erfindungsgemäße Ventilvorrichtung besonders gut geeignet, da sie einen nahezu verschleißfreien Betrieb erlauben und die in einem Schiebeventil auftretenden Belastungen eine werkstoffgerechte Beanspruchung keramischer Materialien erlauben und somit ein zuverlässiger Betrieb über die Lebensdauer der Ventilvorrichtung erzielt werden kann, ohne dass Wartungsmaßnahmen am Hauptventil erforderlich wären.

Weiterhin ist bevorzugt, dass die Betätigungsvorrichtung um etwa 90° verschwenkt werden muss, um von der ersten in die zweite Funktionsstellung zu gelangen. Auf diese Weise wird dem Benutzer der Ventilvorrichtung eine eindeutige optische und haptische Rückmeldung gegeben, ob die offene Funktionsstellung bzw. die geschlossene Funktionsstellung erreicht ist. Diese Ausführungsform ist insbesondere dann vorteilhaft, wenn die Betätigungsvorrichtung als Schwenkhebel oder Drehgriff ausgeführt ist.

Vorzugsweise ist das Ventil zum horizontalen Einbau in eine Außenwand ausgebildet. Diese Ausführungsform ist insbesondere dann für die erfindungsgemäße Ventilvorrichtung vorteilhaft, wenn die Belüftung zu einem großen Teil durch Abfluss des Wassers aus der Abgabeöffnung erzielt wird und folglich die erfindungsgemäßen Vorteile in besonders starkem Maße Bedeutung erlangen.

Weiterhin ist es bevorzugt, dass die Betätigungsvorrichtung ein manuell betätigbares Griffelement aufweist, das mit einer Verbindungsstange zusammenwirkt, die sich durch einen Teil des Verbindungskanals erstreckt, um die Bewegung entlang der ersten Bewegungsbahn auf das Hauptventil zu übertragen. Auf diese Weise wird es ermöglicht, eine manuelle Betätigung im äußeren, frostgefährdeten Bereich vorzunehmen und das Hauptventil im Inneren, frostgeschützten Bereich anzuordnen, was die Frostsicherheit weiter erhöht. Zudem wird ein schlanker und robuster Aufbau erreicht.

Eine weitere Fortbildung ist durch eine erste Rückflussverhinderungsvorrichtung die zwischen Zuflussöffnung und Hauptventil angeordnet ist, gekennzeichnet, zur Verhinderung des Zutritts von Schmutzwasser aus der Ventilvorrichtung durch die Zuflussöffnung. Dies Ausführungsform ist für die Anwendung der erfindungsgemäßen Ventilvorrichtung in Trinkwassemetzen vorteilhaft, um hierdurch den Vorschriften für Armaturen in solchen Netzen nachzukommen und zu verhindern, dass bei Überdruck in der Ventilvorrichtung Wasser aus der Ventilvorrichtung in das Trinkwassernetz gelangt.

Eine bevorzugte Ausführungsform wird anhand der anhängenden Figuren beschrieben.

Es zeigen:
Fig. 1: Eine Explosionsdarstellung der bevorzugten Ausführungsform,
Fig. 2: Eine längsgeschnittene Seitenansicht der bevorzugten Ausführungsform der erfindungsgemäßen Ventilvorrichtung in geschlossener Stellung mit offenem Belüftungsventil,
Fig. 3: Eine längsgeschnittene Detailansicht der äußeren Abschnitts der erfindungsgemäßen Ventilvorrichtung mit offenem Belüftungsventil,
Fig. 4: Eine längsgeschnittene Seitenansicht des äußeren Abschnitts der erfindungsgemäßen Ventilvorrichtung mit geschlossenem Belüftungsventil, und
Fig. 5: Eine längsgeschnittene Seitenansicht des äußeren Abschnitts einer zweiten Ausführungsform der erfindungsgemäßen Ventilvorrichtung.

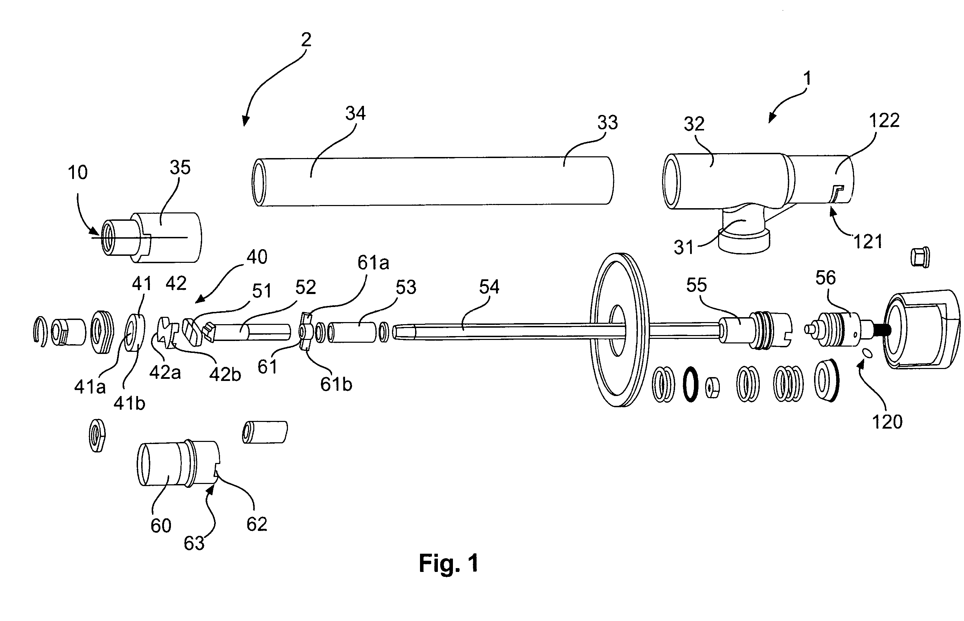

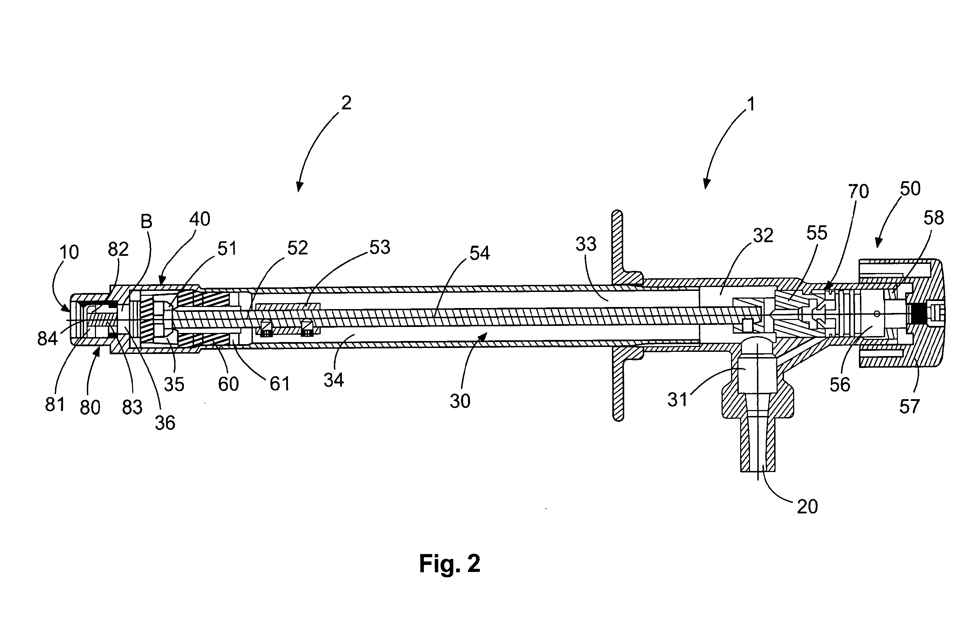

Wie in Fig. 1 und 2 zu erkennen, umfasst die erfindungsgemäße Ventilvorrichtung einen äußeren Abschnitt 1 und einen inneren Abschnitt 2.

Im äußeren Ventilvorrichtungsabschnitt 1 ist eine Abgabeöffnung 20, und eine Betätigungsvorrichtung 50 sowie ein Verbindungskanal 30 mit äußeren Verbindungskanalabschnitten 31-33 angeordnet.

Im inneren Ventilvorrichtungsabschnitt 2 ist eine Zulauföffnung 10, ein Hauptventil 40 sowie untere Verbindungskanalabschnitte 34-36 des Verbindungskanals 30 angeordnet.

In Einbaulage ist der innere Ventilvonichtungsabschnitt im Mauerwerk oder Innenraum eines Gebäudes angeordnet und der äußere Ventilvorrichtungsabschnitt ist außerhalb dieses Mauerwerks im Freien angeordnet und folglich der Umgebungstemperatur ausgesetzt. In Einbaulage weist die Abgabeöffnung 20 nach unten in Schwerkraftrichtung.

In Fig. 2 ist die Ventilvorrichtung mit einem geschlossenen Hauptventil 40 dargestellt. Das Hauptventil 40 umfasst ein erstes Ventilelement 41, das als keramische Scheibe ausgebildet ist und zwei exzentrische Bohrungen 41a,b aufweist. Weiterhin umfasst das Hauptventil 40 ein zweites Ventilelement 42, das einen Querschnitt in Gestalt zweier mit ihren Spitzen aufeinanderstoßender Dreiecke aufweist, die gegenüberliegend zu diesen Spitzen halbrund ausgeformt sind. Die Dreiecksflächen des zweiten Ventilelements 42 bilden zwei Ventildichtungsflächen 42a,b aus, welche so bemessen sind, dass sie die erste und zweite Öffnung im ersten Ventilelement 41 verschließen können.

Das Hauptventil 40 verhindert in der geschlossenen Stellung den Zutritt von Wasser aus der Zulauföffnung 10 in den Verbindungskanal 30, indem das erste Ventilelement 41 so gegen das zweite Ventilelement 42 verdreht ist, dass die zwei exzentrischen Bohrungen 41a,b im ersten Ventilelement auf zwei Ventildichtungsflächen 42a,b des zweiten Ventilelements zu liegen kommen und durch diese abgedichtet werden.

Wird das erste Ventilelement 41 um 90° zur Längsachse der Ventilvorrichtung gedreht, so kommen die beiden exzentrischen Bohrungen 41a,b in Flucht mit zwei entsprechenden Öffnungen im zweiten Ventilelement 42, so dass Wasser von der Zulauföffnung durch die Ventilvorrichtung zu der Abgabeöffnung fließen kann.

Das Wasser strömt hierzu durch die Zulauföffnung 10 in horizontaler Richtung in die Ventilvorrichtung ein. Es passiert dann ein Rückschlagventil 80, das hinter der Zulauföffnung angeordnet ist. Das Rückschlagventil 80 umfasst einen Ventilsitz 81, in den ein Ventilkörper 82 mittels einer Druckfeder 83 gedrückt wird. Der Wasserdruck übt eine gegen die Druckfeder 83 wirkende Kraft auf die Ventilkörperfläche 84 aus und hebt dadurch den Ventilkörper 82 von dem Venülkörpersitz 81 ab, wodurch ein Zulauf von Wasser ermöglicht wird.

Das Wasser strömt dann weiter, wie mit Pfeil B gekennzeichnet, in Richtung des Hauptventils 40.

Das zweite Ventilelement 42 ist drehmomentfest mit einem Kupplungsstücks 51 verbunden, das seinerseits mittels einer Feder-Nutverbindung mit einem ersten Ende einer kurzen Betätigungsstange 52 drehmomentfest verbunden ist. Die kurze Betätigungsstange 52 ist an ihrem anderen Ende als Sechskant ausgebildet und ihrerseits mittels einer Innensechskanthülse 53 mit einer langen Betätigungsstange 54, die ebenfalls einen Sechskantquerschnitt aufweist, drehmomentfest verbunden.

Die lange Betätigungsstange ist an ihrem anderen Ende mittels eines Adapterstücks 55 drehmomentfest aber axial verschiebbar mit einer Ventilhülse 56 verbunden, die ihrerseits drehmomentfest mit einer Betätigungskappe 57 verbunden ist. Auf diese Weise kann ein in die Betätigungskappe 57 eingeleitetes Drehmoment auf das zweite Ventilelement 42 übertragen werden, um dieses entsprechend zu verdrehen und das Hauptventil auf diese Weise von der geschlossenen Funktionsstellung in die offene Funktionsstellung zu bringen und umgekehrt.

Die Betätigungskappe 57 ist mitsamt der Ventilhülse 56 axial beweglich zu den übrigen Bauteilen der Ventilvorrichtung ausgebildet. Die Ventilhülse wird durch eine Hülsenmutter 58 mit Außengewinde, welches in ein entsprechendes Innengewinde in einem Wandabschnitt 122 des Gehäuses der Ventilvorrichtung eingeschraubt ist, daran gehindert, in Richtung der Betätigungskappe aus der Ventilvorrichtung herausgezogen werden zu können.

Das Hauptventil 40 ist in einem Rohrkanalabschnitt 35 angeordnet, der mit einem Rohrkanalabschnitt 33,34 verschraubt ist. Durch den Rohrkanalabschnitt 33,34 erstrecken sich die kurze und lange Betätigungsstange 52, 54 und verbinden das Hauptventil 40 mit der an einem Rohrstück angeordneten Betätigungskappe 57.

Der Rohrkanalabschnitt 35 und die Rohrkanalabschnitte 33,34 sind mittels einer Zwischenhülse 60 miteinander verbunden, indem die Rohrabschnitte 35 und 33,34 jeweils mit einem Innengewinde auf ein entsprechendes Außengewinde der Zwischenhülse 60 aufgeschraubt sind. Die Zwischenhülse 60 wirkt mit einem Anschlagstück 61 zusammen, welches auf den Sechskantabschnitt der kurzen Betätigungsstange 52 drehmomentfest mittels eines Innensechskants aufgeschoben ist und welches zwei sich radial erstreckende Anschlagarme 61a,b aufweist. Die Anschlagarme 61 a,b wirken mit Anschlägen 62 und 63 an der Zwischenhülse 60 zusammen und beschränken auf diese Weise den Schwenkwinkel der kurzen Betätigungsstange 52 und folglich der gesamten Betätigungsvorrichtung auf 90°.

Das Anschlagelement 61 ist so zum zweiten Ventilelement 42 ausgerichtet, dass hierdurch in Zusammenwirkung mit einer entsprechenden Ausrichtung der Zwischenhülse 60 zum ersten Ventilelement 41 das Hauptventil 40 in der in Fig. 1 und 2 dargestellten Anschlagstellung geschlossen ist und in der hierzu durch Drehen der Betätigungsstange um 90° erreichbaren anderen Anschlagstellung geöffnet ist.

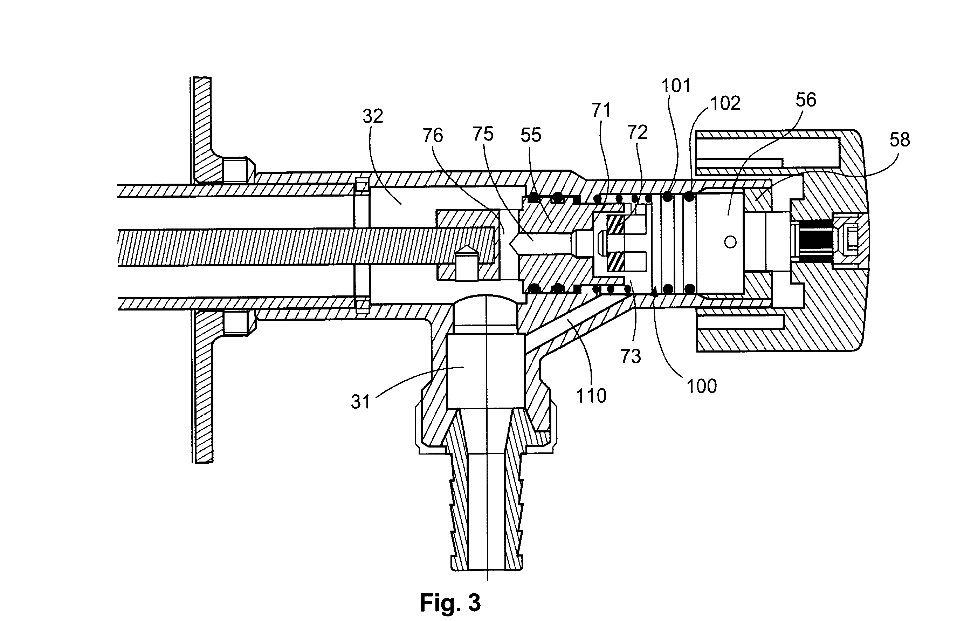

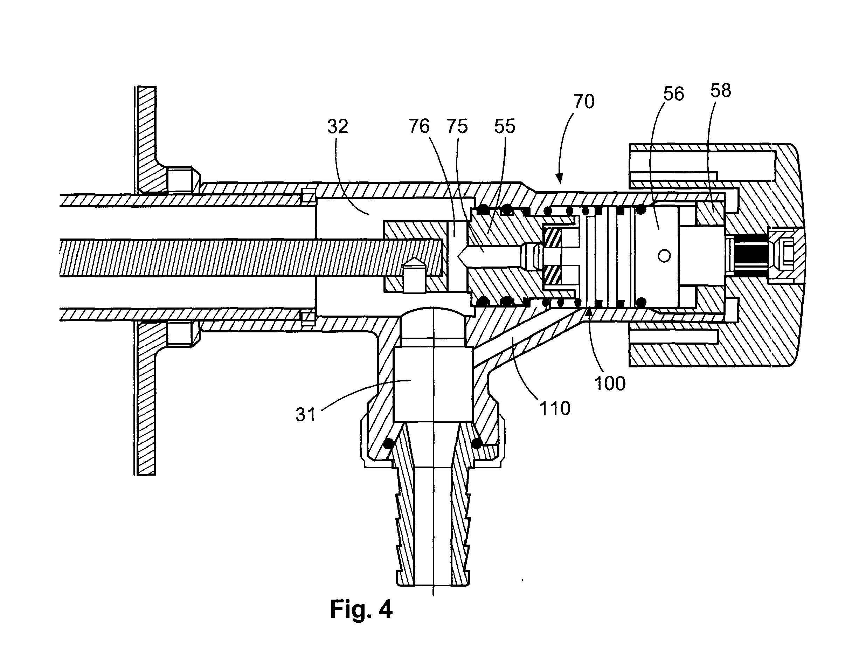

Zwischen der Betätigungskappe 57 und dem Rohrkanalabschnitt 32 ist ein Belüftungsventil 70 angeordnet, welches dazu dient, das Innere der Ventilvorrichtung zu belüften. Aufbau und Funktion des Belüftungsventils 70 werden anhand Fig. 3 und 4 beschrieben.

Das Belüftungsventil 70 umfasst einen Ventilsitz 71 und einen Ventilkörper 72, der einstückig mit der Ventilhülse 56 verbunden ist. Der Ventilsitz 71 des Belüftungsventils ist in dem Adapterstück 55 ausgebildet, das mittels zweier O-Ringe abgedichtet in der Gehäusewandung der Ventilvorrichtung eingesetzt ist. In dem Adapterstück 55 sind Bohrungen 75,76 ausgebildet, die das Belüftungsventil mit dem Verbindungskanalabschnitt 32 verbinden.

Ein Belüftungszwischenraum 100 ist zwischen der Betätigungskappe 57 und dem Belüftungsventil 70 angeordnet und mittels zweier O-Ringe 101,102 in Richtung der Betätigungskappe abgedichtet. Ein Bypasskanal 110 führt von dem Belüftungszwischenraum 100 schräg abwärts in den Verbindungskanalabschnitt 31 in der Nähe der Abgabeöffnung 20.

Auf diese Weise kann über eine geschlossene Bypassleitung, gebildet durch den Bypasskanal 110, den Belüftungszwischenraum 100 und die Bohrungen 75,76 Luft vom Verbindungskanalabschnitt 31 zum Verbindungskanalabschnitt 32 strömen.

Eine Druckfeder 73 stützt sich an einem ringförmigen Absatz der Gehäusewand ab und drückt die Ventilhülse 56 und den Ventilkörper 72 mitsamt der daran befestigten Betätigungskappe 57 nach außen.

Wie aus Fig. 1 ersichtlich, ist an der Ventilhülse 56 ein radial angeordneter Führungsstift 120 befestigt, der innerhalb einer Kulissenbahn 121 in einem feststehenden Wandabschnitt 122 der Ventilvorrichtung geführt wird. Die Kulissenbahn 121 erlaubt es, dass die Betätigungskappe 57 mit der daran befestigten Ventilhülse aus einer Ausgangsstellung, in der das Hauptventil geschlossen und das Belüftungsventil freigegeben ist, nach innen in Richtung des Belüftungsventils axial bewegt wird und hierbei das Belüftungsventil über Kontaktdruckflächen zwangsweise schließt. Wenn das Belüftungsventil in der geschlossenen Stellung ist, erlaubt die Kulissenbahn 121 eine Verdrehung der Betätigungskappe um 90°. Diese Drehung wird über die Ventilhülse 56 auf das Adapterstück 55 übertragen und dann weiter über die Betätigungsstange 54 auf den Ventilkörper 42, der folglich in die offene Stellung gedreht werden kann.

Wird die Betätigungskappe um 90° zurückgedreht, so drückt das Federelement 73 die Betätigungskappe und den Ventilkörper 72 automatisch wieder nach Außen in die Ausgangsstellung. Dies ermöglicht somit die Wasserentleerung des Innenraums der Ventilvorrichtung, indem Luft von der Abgabeöffnung über die Bypassleitung in den oberen Bereich der Ventilvorrichtung eindringen kann und hierdurch das Restwasser aus Ventilvorrichtung durch die Abgabeöffnung gleichzeitig ablaufen kann.

Wenn jedoch in der Ventilvorrichtung ein Druck verbleibt, beispielsweise weil in einem angeschlossenen Schlauch ein Druck vorherrscht, so wirkt dieser Innendruck über die Bypassleitung auch in dem Belüftungszwischenraum 100. Es findet folglich weder eine Belüftung des Innenraums der Ventilvorrichtung statt, noch ist es möglich, dass Flüssigkeit über das Belüftungsventil nach Außen dringt, wenn ein Innendruck bei geschlossenem Hauptventil verbleibt. Auf diese Weise wird zuverlässig verhindert, dass unerwünscht Flüssigkeit durch das Belüftungsventil austritt.

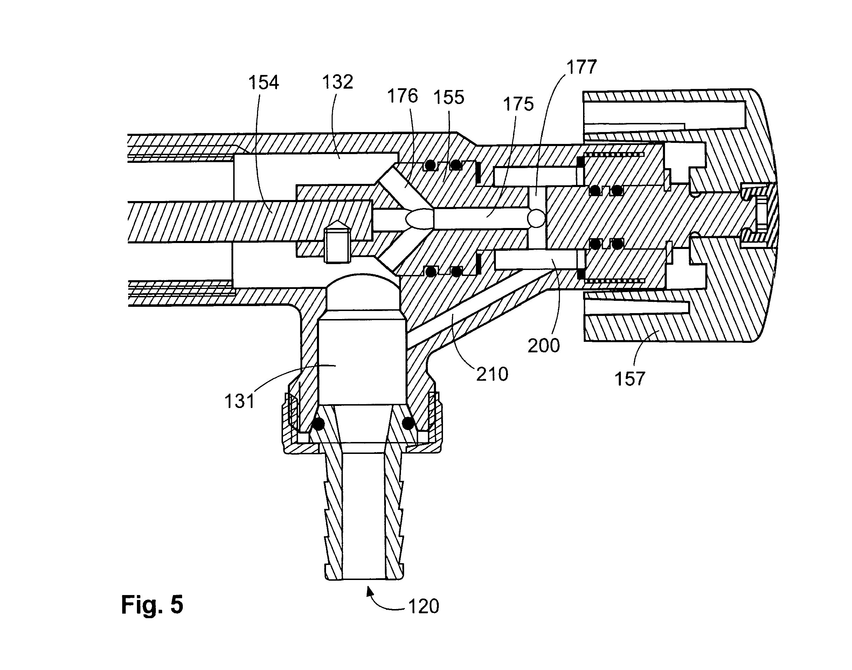

Fig. 5 zeigt eine zweite Ausführungsform des erfindungsgemäßen Außenwandventils. Diese Ausführungsform weist kein Belüftungsventil auf und verzichtet somit auf eine Zwangsöffnung durch axiales Verschieben (insbesondere Drücken) des Betätigungsknopfs.

Die dargestellte Variante des erfindungsgemäßen Außenwandventils weist ebenfalls eine Betätigungskappe 157 auf, die mit einer langen Betätigungsstange 154 über ein Adapterstück 155 drehmomentfest verbunden ist. In dem Adapterstück 155 sind Belüftungskanäle ausgebildet, die einen Bypasskanal 210, der sich von der Nähe einer Abgabeöffnung 120 schräg nach oben zu einem Belüfturigszwischenraum 200 erstreckt, mit einem Kanalabschnitt oberhalb der Mündung des Bypasskanals 210 verbinden. Auf diese Weise ist eine permanent offene Verbindung zwischen dem unteren Kanalabschnitt 131 und dem oberen Kanalabschnitt 132 über den Bypasskanal 210, den Belüftungszwischenraum 200 und die Belüftungskanäle 175-177 gewährleistet, so dass eine sichere Belüftung des Innenraums der Ventilvorrichtung gewährleistet ist, wenn die Betätigungskappe von der offenen in die geschlossene Stellung bewegt wird.

Bei der in Fig. 5 gezeigten Ausführungsform ist die Betätigungskappe nicht axial verschiebbar, sondern kann nur um einem Winkel von 90° um die Längsachse des Außenwandventils verdreht werden. Auf eine Kulissenführung der Betätigungskappe kann bei der in Fig. 5 gezeigten Ausführungsform verzichtet werden.

## Patentansprüche

1. Ventilvorrichtung für den frostsicheren Außenbetrieb, umfassend:
- eine Zulauföffnung (10),
- eine Abgabeöffnung (20),
- einen Verbindungskanal (30), welcher die Zulauföffnung mit der Abgabeöffnung verbindet,
- ein Hauptventil (40), insbesondere ein Schieberventil oder Drehschieberventil, welches ausgebildet ist, um die Fluidverbindung durch den Verbindungskanal in einer offenen Funktionsstellung freizugeben und in einer geschlossenen Funktionsstellung zu verschließen, eine Betätigungsvorrichtung (50,57) zum Betätigen des Hauptventils, und
- Entleerungsmittel (70) zum Entleeren der Ventilvorrichtung in der geschlossenen Funktionsstellung,
**dadurch gekennzeichnet, dass** die Betätigungsvorrichtung (57) ausgebildet ist, um die Entleerungsmittel durch Bewegen der Betätigungsvorrichtung entlang einer ersten Bewegungsbahn zu öffnen bzw. zu schließen und um das Hauptventil durch Bewegen der Betätigungsvorrichtung entlang einer zweiten Bewegungsbahn zu öffnen bzw. zu schließen.

2. Ventilvorrichtung nach Anspruch 1,
**dadurch gekennzeichnet, dass** die Entleerungsmittel ein in einer Bypassleitung angeordnetes Belüftungsventil (70) aufweisen, das einen Zutritt von Umgebungsluft in den Verbindungskanal durch die Bypassleitung zwecks Entleerung der Flüssigkeit aus dem Verbindungskanal in einer geöffneten Stellung erlaubt und in einer geschlossenen Stellung verhindert.

3. Ventilvorrichtung nach Anspruch 2,
**dadurch gekennzeichnet, dass** das Belüftungsventil einen Ventilsitz (71) und einen Ventilkörper (72) umfasst, der in einer ersten Position der Betätigungsvorrichtung auf einer ersten Bewegungsbahn auf den Ventilsitz gepresst ist und in einer zweiten Position der Betätigungsvorrichtung auf der ersten Bewegungsbahn vom Ventilsitz abgehoben ist.

4. Ventilvorrichtung nach einem der vorhergehenden Ansprüche,
**dadurch gekennzeichnet, dass** die Entleerungsmittel eine Bypassleitung (110) umfassen, die einen ersten Verbindungskanalabschnitt (31) mit einem zweiten Verbindungskanalabschnitt (32) verbindet und dass der zweite Verbindungskanalabschnitt (32) in Einbaulage der Ventilvorrichtung in Schwerkraftrichtung oberhalb des ersten Verbindungskanalabschnitts (31) liegt.

5. Ventilvorrichtung nach Anspruch 2 oder 3,
**dadurch gekennzeichnet, dass** die erste Bewegungsbahn zur Betätigung des Belüftungsventils dient und die zweite Bewegungsbahn zur Betätigung des Hauptventils dient.

6. Ventilvorrichtung nach einem der vorhergehenden Ansprüche,
**dadurch gekennzeichnet, dass** die zweite Bewegungsbahn eine Drehbewegungsbahn ist und die erste Bewegungsbahn eine axial zu dieser Drehbewegungsbahn liegende translatorische Bewegungsbahn ist.

7. Ventilvorrichtung nach einem der vorhergehenden Ansprüche,
**dadurch gekennzeichnet, dass** die Betätigungsvorrichtung (50) ein in den zwei Bewegungsbahnen bewegbares Betätigungselement (57) umfasst.

8. Ventilvorrichtung nach einem der vorhergehenden Ansprüche,
**dadurch gekennzeichnet, dass** die Entleerungsmittel eine Belüftungsöffnung aufweisen, die einen Zutritt von Umgebungsluft in den Verbindungskanal zwecks Entleerung der Flüssigkeit aus dem Verbindungskanal erlaubt, vorzugsweise durch die Abgabeöffnung.

9. Ventilvorrichtung nach einem der vorhergehenden Ansprüche,
**gekennzeichnet durch** eine Führungsvorrichtung (120,121) zum Führen der Betätigungsvorrichtung entlang der ersten und zweiten Bewegungsbahn.

10. Ventilvorrichtung nach Anspruch 9,
**dadurch gekennzeichnet, dass** die Führungsvorrichtung die Betätigungsvorrichtung aus einer ersten, geschlossenen Position, in der das Hauptventil geschlossen und die Entleerungsmittel in einer Entleerungsposition sind
- in einer ersten Betätigungsphase entlang einer ersten Richtung auf der ersten Bewegungsbahn in eine zweite Position führen, in der das Hauptventil geschlossen und die Entleerungsmittel in einer Nicht-Entleerungsposition sind, und
- in einer zweiten Betätigungsphase entlang einer ersten Richtung auf der zweiten Bewegungsbahn in eine dritte, geöffnete Position führen, in der das Hauptventil geöffnet und die Entleerungsmittel in einer Nicht-Entleerungsposition sind.

11. Ventilvorrichtung nach Anspruch 9 oder 10,
**dadurch gekennzeichnet, dass** die Führungsvorrichtung die Betätigungsvorrichtung aus der dritten, geöffneten Position
- in einer dritten Betätigungsphase in einer zweiten Richtung entlang der zweiten Bewegungsbahn entgegengesetzt zur Bewegung der zweiten Betätigungsphase zurück in die zweite Position führen, und
- in einer vierten Betätigungsphase in einer zweiten Richtung entlang der ersten Bewegungsbahn entgegengesetzt zur Bewegung der ersten Betätigungsphase zurück in die erste Position führen.

12. Ventilvorrichtung nach einem der vorhergehenden Ansprüche,
**dadurch gekennzeichnet, dass** die Betätigungsvorrichtung eine Kulissenführung (121) umfasst.

13. Ventilvorrichtung nach Anspruch 12,
**dadurch gekennzeichnet, dass** die Kulissenführung mindestens einen Stift (120) umfasst, der mit einem Gehäuseabschnitt der Ventilvorrichtung oder mit einem Element der Betätigungsmittel verbunden ist, und eine den Stift führende Kulissenbahn (121), die entsprechend an einem Element der Betätigungsmittel oder am Gehäuse der Ventilvorrichtung ausgebildet ist.

14. Ventilvorrichtung nach einem der vorhergehenden Ansprüche,
**dadurch gekennzeichnet, dass** die Betätigungsvorrichtung (50) um etwa 90° verschwenkt werden muss, um von der offenen in die geschlossene Funktionsstellung zu gelangen.

15. Ventilvorrichtung nach einem der vorhergehenden Ansprüche,
**dadurch gekennzeichnet, dass** die Betätigungsvorrichtung ein manuell betätigbares Griffelement aufweist, das mit einer Verbindungsstange zusammenwirkt, die sich durch einen Teil des Verbindungskanals erstreckt, um die Bewegung entlang der ersten Bewegungsbahn auf das Hauptventil zu übertragen.
